(19) **Europäisches Patentamt / European Patent Office / Office européen des brevets**

(11) **EP 2 685 686 B1**

(12) **EUROPEAN PATENT SPECIFICATION**

(45) Date of publication and mention
of the grant of the patent:
**10.06.2015 Bulletin 2015/24**

(51) Int Cl.:
*H04L 25/02* (2006.01)  *H04L 5/00* (2006.01)
*H04L 27/26* (2006.01)

(21) Application number: **12005071.1**

(22) Date of filing: **09.07.2012**

(54) **Method and apparatus for channel estimation based on estimated auto correlation**

Verfahren und Vorrichtung zur Kanaleinschätzung basierend auf eingeschätzter Autokorrelation

Procédé et appareil d'estimation de canal basée sur une autocorrélation estimée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2014 Bulletin 2014/03**

(73) Proprietor: **MIMOON GmbH
47057 Duisburg (DE)**

(72) Inventor: **Turner, Jeremy
Berhampore 6023
Wellington (NZ)**

(74) Representative: **Eisenführ Speiser
Patentanwälte Rechtsanwälte PartGmbB
Postfach 31 02 60
80102 München (DE)**

(56) References cited:
**WO-A1-2006/018034      WO-A1-2011/154964
US-A1- 2010 195 774      US-A1- 2010 260 248
US-B1- 7 139 320**

• SINEM COLERI ET AL: "Channel Estimation Techniques Based on Pilot Arrangement in OFDM Systems", IEEE TRANSACTIONS ON BROADCASTING, IEEE SERVICE CENTER, PISCATAWAY, NJ, US, vol. 48, no. 3, 1 September 2002 (2002-09-01), XP011070267, ISSN: 0018-9316

**Description**

FIELD OF THE INVENTION

The present invention relates to a method, apparatus and computer program product for performing channel estimation in a receiver of a multi-channel communication system, such as - but not limited to - the long term evolution (LTE) mobile communication system which uses orthogonal frequency division multiplexing (OFDM).

BACKGROUND OF THE INVENTION

In fourth generation (4G) cellular systems and other recent wireless standards, multiple data streams of an interfered signal have to be decoded. As an example, OFDM has become the selected transmission technique for several recent wireless standards, such as the IEEE standard for local and metropolitan area networks (better known as WiMAX), or LTE of the 3$^{rd}$ Generation Partnership Project (3GPP). In OFDM, the transmission bandwidth is divided into multiple narrow band subcarriers.

In wireless communications the mobile channel is known to vary over time and frequency. This is due to both path-loss due to distance, having multiple scatters, and movement of the device. Therefore, channel estimation is an integral part of a downlink (DL) receiver design. Mobile radio environment introduces time and frequency selective fading and synchronization offsets/errors. Performance of channel estimation relies heavily on estimation of these fading processes and synchronization offsets. Such synchronization offsets include time synchronization errors causing delay spread and (frequency synchronization errors causing Doppler spread. Due to propagation delays, the receiver may be unable to precisely detect the start of an OFDM symbol, while Doppler effects and frequency gradients between the transmitter oscillator and the receiver oscillator contribute to Doppler spread.

To allow good decoding performance in coherent pilot based schemes (e.g. LTE, WiMAX), channel estimation is required. To achieve this, LTE or other wireless communication systems use a special pattern in which (depending upon the number of transmit antennas and physical layer cell identity) cell specific pilots or reference signals are distributed throughout a time and frequency resource element grid, as described for example in 3GPP specification TS 36.211 - v8.9.0, "Physical Channels and Modulation". With the help of least squares filtering, the time and frequency resource element grid can be used to obtain estimates of the channel. A so-called Wiener filter can be used as a channel estimator which minimizes mean square error (MSE) of the channel estimates when channel statistics and noise variance are known.

The goal of the Wiener filter is to filter out noise that has corrupted a received signal. It is based on a statistical approach. It is assumed that the spectral properties of the original signal and the noise are known, and the linear time-invariant filter whose output would come as close to the original signal as possible is searched. Wiener filters are a class of optimum linear filters which involve linear estimation of a desired signal sequence from another related sequence. In the statistical approach to the solution of the linear filtering problem, availability of certain statistical parameters (e.g. mean and correlation functions) of the useful signal and unwanted additive noise can be assumed. The problem is to design a linear filter with the noisy data as input and the requirement of minimizing the effect of the noise at the filter output according to some statistical criterion. A useful approach to this filter-optimization problem is to minimize the MSE that is defined as the difference between some desired response and the actual filter output. For stationary inputs, the resulting solution is commonly known as the Weiner filter.

The Weiner filter can be written as:

$$\widetilde{h} = Bx \tag{1}$$

where $\widetilde{h}$ is the channel estimate, B is the filter matrix, and x are received estimates (taps). In the case of a wireless system such as LTE, x are received pilot symbols.

To minimize the MSE, B should be chosen such as:

$$B = R_{hx} R_{xx}^{-1} \tag{2}$$

where $R_{xx} = E\{xx^H\}$ is the autocorrelation of matrix x, and $R_{hx} = E\{hx^H\}$ is the cross-correlation between h and x.

In an OFDM system, similar to LTE and WiMAX the pilots are typically spaced in a grid. They can be seen to be arranged in a pattern in both the frequency (subcarrier) direction, and in time (OFDM symbol) direction

One possible channel filtering estimation method is Weiner 2x1 D (one-dimensional) filter made from a separate frequency direction filter and time direction filter. Any part (frequency or time) of the filter may be used with other filter types (window based, linear, polynomial interpolation etc). A Weiner 2D (two-dimensional) filter uses a joint filter of both time and frequency direction.

In order to ideally compute B, both $R_{hx}$ and $R_{xx}$ are required. In a normal wireless system, with a changing channel, the values are not known in advance. Instead they can be either estimated directly, or modeled. One common modeling technique is to assume that the correlation in the frequency direction is a function of delay spread, and the correlation in the time direction is a function of Doppler spread (or velocity of the device). Basic models in the frequency direction may use a rectangular or exponential power delay profile (PDP), and in the time direction may use Jakes model which implements the channel as a sum of sinusoids. Of course other models are possible.

To use the models, the following variables are required to be known or estimated:

- Delay spread
- Doppler shift
- Noise variance

More complex models may require more variables. Computing the filter matrix B directly requires an inverse, and $R_{xx}$ may be a large matrix, which is infeasible to calculate in real time on a digital signal processor (DSP) or similar device. Typically, the model is used to generate pre-calculated possible values of the filter matrix B, which are then selected based on variable estimates.

Sub-optimal approaches may set the variables to some worst possible case values. However this degrades channel estimation performance. In addition, not all channel models may be possible to use, and the actual channel may not closely match the channel model.

Hence, a problem in wireless channels is accurate channel estimation. For Weiner filter style designs, accurate taps are required. Some current approaches use 'worst-case' values, which do not offer optimal performance. Other approaches require the use of simplified correlation functions, or the calculation of large matrix inverses leading to high complexity.

The US 2010/0195774 A1 discloses least squares channel identification for OFDM systems, wherein a channel estimate is generated in the time domain for use in either frequency domain equalizer or in a time domain equalizer. General estimation is accomplished in the time domain using a locally generated reference signal. An initial estimate is generated by a channel estimator from a cross-correlation between the time domain reference signal and an input signal input to a receiver. Furthermore, a successive channel estimate is determined by a vector addition (or subtraction) to the initial channel estimate. More specifically, the cross-correlation result is used as an initial estimate of the channel. The channel estimate is then revised from this initial channel estimate over D steps. The approximation index D is a fixed parameter and determines the number of basis filters of a basis filter module of the least squares channel estimation. The at least one successive channel estimate reduces the minimum mean square error of the estimate with respect to a received signal.

Additionally, the US 7 139 320 B1 discloses a method and an apparatus for multicarrier channel estimation and synchronization using pilot sequences, wherein received embedded system pilot symbols are inverse Fourier transformed at expected index locations and correlated with computed complex conjugates of inverse Fourier transforms of pilot symbols for providing a correlation function for the channel impulse response. The channel impulse response is then filtered, interpolated and Fourier transformed for determining channel estimates for equalization.

Additionally, the WO 2006/018034 A1 discloses a filter apparatus and method for frequency domain filtering, wherein a transformer is configured for pre-processing a time domain signal or for processing a frequency domain signal into which the time domain signal has been transformed, in order to introduce a phase shift to the transformed signal so as to shift the spectrum of the transformed signal towards the pass-band of a low-pass filter.

Moreover, the US 2010/0260248 A1 discloses a channel estimation technique for a multi-carrier system which uses pilot signals to first obtain pilot subcarrier channel responses, then estimate the mean delay and the root-mean-square delay spread of the channel, and then uses interpolation to obtain the channel responses of arbitrary subcarriers.

Furthermore, the WO 2011/154964 A1 discloses robust channel estimation of OFDM systems, wherein a Maximum Likelihood (ML) estimate of a channel frequency response is obtained at the pilot locations. A hypothesis test is performed on the ML estimates towards a shrinkage target to obtain better estimates of the channel frequency response at the pilot locations and these estimates are interpolated using a filter to get a set of complete estimates of the channel over a resource block.

Finally, Sinem Coleri et al.: "Channel Estimation Techniques Based on Pilot Arrangement in OFDM Systems", IEEE TRANSACTIONS ON BROADCASTING, vol. 48, no. 3, 1 September 2002 discloses a study on channel estimation based on a comb type pilot arrangement through different algorithms for both estimating channel at pilot frequencies and interpolating the channel. The estimation of a channel at pilot frequencies is based on LS and LMS while the channel interpolation is done using linear interpolation, second order interpolation, low-pass interpolation, spline cubic interpolation, and time domain interpolation.

## SUMMARY OF THE INVENTION

It is an object of the present invention to provide an improved channel estimation by which selection of closest taps can be ensured at low complexity.

This object is achieved by a method as claimed in claim 1, an apparatus as claimed in claim 10, and a computer program product as claimed in claim 15.

Accordingly, auto correlation of the channel can be estimated based on the received pilots in either time or frequency or both directions to obtain estimated tap values. The 'best' fit can be used as a basis for selecting taps for Weiner based filters (Weiner1D, Weiner2x1D, Weiner2D etc). The taps may either be calculated in real time, or pre-calculated and stored for lookup.

The proposed solution shows a way to optimally select the closest taps from a range of values, which will then provide improved channel estimation performance. The selection of 'best' pre-calculated filter taps, e.g., for the Weiner filter based channel estimation, provides accurate taps which lead to improved channel estimation, demodulation and decoding performance. In addition, arbitrary correlation functions can be used, not necessarily following a standard model, which may not match the actual channel. A low cost metric with simple implementation suitable for digital signal processors (DSPs) can be used. In general, the low complexity of the proposed solution allows for easy implementation in either software or hardware.

Moreover, any arbitrary expected autocorrelation function is supported and the solution is not limited to basic models like rectangular or exponential PDP, or Jakes model etc.

According to a first aspect, virtual pilot reference signals may be calculated to assist in reducing bias from offset pilot reference signal positions, e.g., due to offset subcarrier grids.

According to a second aspect which may be combined with the first aspect, only a portion of all possible lag values may be used for the autocorrelation. Thereby, the auto correlation estimates may be reduced to a small number out of the possible lag values to reduce complexity with a small reduction in accuracy

According to a third aspect which may be combined with any one of the first and second aspects, an averaging step or means for averaging the derived estimated tap values over the time domain (e.g. sub-frames of an OFDM signal) or over different receive or transmit antennas (i.e. respective channels) may be provided. In a specific example, the length of the averaging may be adjustable over the time domain.

According to a fourth aspect which may be combined with any one of the first to third aspects, at least one of delay and Doppler spread may be (directly) calculated by applying a predefined channel model to the estimated tap values. Thus, delay spread and/or Doppler spread can be compared to a theoretical model. As an example, the 'best' fit can be used to determine delay spread/Doppler spread estimates. Hence, both delay spread and Doppler spread can be estimated, which may be useful in controlling a feedback rate of the channel to the base station (e.g. enhanced NodeB (eNB)), synchronization, and for other areas.

According to a fifth aspect which may be combined with any one of the first to fourth aspects, the comparing metric may comprise minimum mean squared error (MMSE). The auto correlation estimate (i.e. estimated tap values) may be compared to pre-calculated expected auto correlation values (i.e. pre-calculated tap values) based on a channel model, or any arbitrary values. The comparison can be done with any other metric function.

According to a sixth aspect which may be combined with any one of the first to fifth aspects, residual noise power of an estimated tap value at a lag value of zero (i.e. lag "0") may be compensated or the estimated tap value at the lag value of zero may be ignored in the comparison metric.

According to a seventh aspect which may be combined with any one of the first to sixth aspects, the estimated tap values may be pre-calculated and stored (in a look-up table) for later lookup.

The above features may be implemented as hardware circuits integrated on a single chip or chip set, or wired on a circuit board. As an alternative, at least parts of the features may be implemented as a software program or routine controlling a multi-tasking processor or computer device, e.g. a software-defined radio (SDR) implementation. As an example, the software program or routine may be implemented in C type programming language.

Other advantages, modifications are defined in the dependent claims.

## BRIEF DESCRIPTION OF THE DRAWINGS

The invention will now be described in greater detail based on embodiments with reference to the accompanying drawings in which:

Fig. 1 shows a schematic block diagram of a channel estimation process or device according to a first embodiment;

Fig. 2 shows a diagram of a two-dimensional resource block with a predetermined pilot pattern; and

Fig. 3 shows a schematic block diagram of a software-based implementation according to a second embodiment.

## DESCRIPTION OF THE EMBODIMENTS

In the following, embodiments of the present invention will be described based on a channel estimation which may be applied in a DL LTE receiver device.

Pilot based estimation methods are most commonly used methods which are applicable in systems where the sender emits some known signal. Blind estimation, on the other hand, relies on some properties of the signal (e.g., cylcostationarity of the signal) and is rarely used in practical OFDM systems. Adaptive channel estimation methods are typically used for rapidly time-varying channel.

At the transmitter, binary data is mapped to a specific modulation (e.g. quadrature phase shift keying (QPSK) and the modulated data undergoes serial-to-parallel (S/P) conversion, forming a vector of ($N_0$ - $N_{pilot}$) symbols, where $N_0$ is the number of occupied sub-carriers used for the proposed estimation and $N_{pilot}$ is the number of pilot sub-carriers. Known pilot symbols are then inserted into the modulated data, forming frequency-domain transmitted data. Inverse Fourier transform (IFFT) is performed to generate a time-domain vector x(n) and a cyclic prefix is then pre-appended to x(n). After parallel-to-serial (P/S) conversion, digital-to-analog conversion and low-pass filtering, time-domain data is transmitted over a linear time-invariant average white Gaussian noise (AWGN) channel h(n) with noise z(n).

At the receiver, the opposite set of operations is performed. After analog-to-digital conversion and low-pass filtering, the received signal goes through a serial-to-parallel conversion and is stored. Cyclic prefix is then removed and a received symbol vector y(n) is created. Fast Fourier Transform (FFT) is then applied on y(n), creating a frequency based vector. After dropping of zero-padding, equalization is applied using a pilot-based channel estimation method, and the pilot symbols are removed from the equalized signal. The equalized data then undergoes a P/S conversion and demodulation, creating estimates of the transmitted binary data.

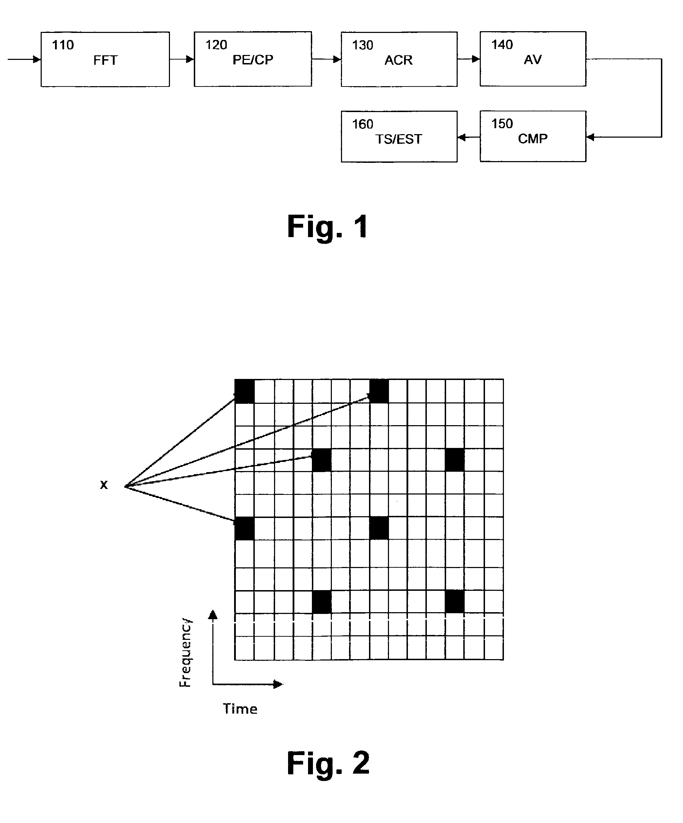

Fig. 1 shows a schematic block diagram of a channel estimation process or device according to a first embodiment, which may be provided at an OFDM receiver.

The OFDM transmitter maps pilot reference signals x to predefined subcarriers, along with data subcarriers. E.g., for the present LTE based example, pilot reference signals x are available every $6^{th}$ subcarrier on OFDM symbols 0, 4, 7 and 11 for normal cyclic prefix.

Fig. 2 shows a diagram of a two-dimensional resource block with indicates exemplary positions of the pilot reference signals x within the grid of resource elements. As can be gathered from Fig. 2, each sub-carrier includes 14 symbols (time axis) and the resource block includes 12 subcarriers (frequency axis). The shaded rectangles indicate the pilot reference signals x.

The transmitted signal on each downlink time slot is thus defined by a resource grid of $N_{BW}^{DL}$ sub-carriers and $N_{symbl}^{DL}$ OFDM symbols as illustrated in Fig. 2. Each element in the resource grid is called resource element and is uniquely identified by the index pair (i, j) where i and j are indices in frequency and time domains, respectively. In LTE, the frequency separation between the sub-carriers is set to 15 kHz. The value of $N_{BW}^{DL}$ depends on the transmission bandwidth of the cell and fulfills $72 \leq N_{BW}^{DL} \leq 1200$ 1200 (for LTE Release 8). The value of $N_{symbl}^{DL}$ is set to either 7 or 6, depending on the cyclic prefix length used in the time slot. The longer cyclic prefix is used in channels with large excess delay such as hilly terrain. A resource block is defined as $N_{symbl}^{DL}$ consecutive OFDM symbols in the time domain and $N_{BW}^{DL} = 12$ consecutive sub-carriers in the frequency domain. A resource block thus consists of $N_{symbl}^{DL} \times N_{BW}^{DL}$ resource elements, and is the minimum amount of resource elements allocated to a user in downlink.

However, other possibilities exist for allocating pilots in the time-frequency domain of an OFDM system. An entire OFDM symbol may be allocated as pilot. Such an allocation can be highly beneficial for channel estimation in highly frequency-dispersive and low Doppler channels at the expense of sacrificing data rate. On the other hand, pilots may be transmitted on individual sub-carriers during the entire transmission period. Such a strategy can be advantageous in moderately frequency-selective and high Doppler channels. However, frequency-spacing and time-spacing between the pilots should be reasonable enough to fully estimate the channel. For ideal reconstruction, the frequency-spacing between the pilots should fulfill the requirements of the 2-D sampling theorem.

Turning back to Fig. 1, the OFDM receiver first synchronizes to the signal (not shown here). At regular intervals an FFT is performed at an FFT step or stage 110 to transform the signal from time domain into frequency domain.

At a subsequent pilot extraction and compensation step or stage (PE/CP) 120, received pilots y are extracted based on the pilot reference signal positions of Fig. 2, where y = hx + n. Additionally, the received pilots y are compensated by the expected conjugate of the pilot reference signals, to get $z = y\bar{x}$. The compensated pilots can be represented by a matrix $z_{i,j}$ where i is the time index, and j is the frequency index.

In the following autocorrelation step or stage (ACR) 130, autocorrelation in the frequency direction is performed, wherein the received pilots y in one OFDM symbol (e.g. i = 0 which gives $z_{0,j}$) are used to calculate:

$$\widetilde{R}_{xx}(k) = \frac{1}{N-k} \sum_{n=0}^{N-1-k} z_{i,n} \bar{z}_{i,n+k} \tag{3}$$

The value of k is the 'lag' of the sequence to itself, and N is the number of samples available in one OFDM symbol. In the case of non-continuous pilot spacing in frequency direction, the lag may have fixed possible values. For example in LTE, the spacing must be a multiple of 6 subcarriers. To decrease complexity, not all possible lag values must be computed, with some slight decrease in performance. For example the first 4 lags (spacing of 0, 6, 12, 18 subcarriers in LTE) may be sufficient.

To perform autocorrelation in the time direction, some or all received pilots in different OFDM symbols are used to calculate:

$$\widetilde{R}_{xx}(k) = \frac{1}{N} \sum_{n=0}^{N-1} z_{i,n} \bar{z}_{i+k,n} \tag{4}$$

In the case of non-continuous pilot spacing in the time direction, the lag may have fixed possible values. For example in LTE as shown in Fig. 2, the pilots are available at OFDM symbols 0, 4, 7 and 11. If using a single subframe it is only possible to calculate lags of 0 (each OFDM symbol with itself), 3 (using OFDM symbol 4 and 7), 4 (using pairs 0 and 4, 7 and 11), 7 (using pairs 0 and 7, 4 and 11) and 11 (using OFDM symbol 0 and 11). It is possible to calculate additional lags using other subframes.

As an option, virtual pilots may be used to increase the accuracy of the calculation, or to remove bias. For example, in LTE OFDM symbol 0 and 4, different subcarriers may be used for pilot reference symbols, separated by 3 subcarriers. For one or both OFDM symbols 'virtual' pilots can be calculated at the correct position.

To decrease complexity, not all possible lay values must be computed, with some slight decrease in performance.

In a noisy system, the values of $\tilde{R}_{xx}(k)$ may be further enhanced by providing an average step or stage (AV) 140 for averaging over multiple OFDM symbols (i.e. values of i), multiple received values, and/or over time (e.g. multiple sub-frames). The length of the required averaging may be fixed, or determined by other parameters (e.g. estimation bandwidth or noise or Doppler spread estimates).

After calculating the estimated $\tilde{R}_{xx}(k)$ for a range of different lags k, the values can be used to either pick the optimal filter taps, or to calculate delay spread/Doppler spread according to a model.

A range of actual $\tilde{R}_{xx}(k)$ values can be pre-calculated and stored. They may be selected arbitrary or may be determined based on a model or based on expected channel conditions or may consist of a mix of values based on different models. Model-based precalculated values are optional. They can be used to compare against arbitrary values, compared to existing methods which try to estimate directly one or more parameters in a model.

In the present first embodiment, a comparison step or stage (CMP) 150 is provided for calculating a comparison metric of the estimated versus expected correlation.

One example of such a comparison metric may be MSE, where the metric for a particular value *i* is

$$M(i) = \sum_{k=0}^{K-1} (|\widetilde{R}_{xx}(k) - R_{xx,i}(k)|)^2 \tag{5}$$

It is noted that $\tilde{R}_{xx}(k)$ should be normalized for this calculation. In this case the metric M with minimum value can be chosen.

The value of $\tilde{R}_{xx}(k) = R_{xx}(0) + \sigma^2$, e.g. the estimate is biased due to noise at a lag of 0.

Starting from the equation:

$$E(\widetilde{R}_{xx}) = E(\frac{1}{N-k} \sum_{n=0}^{N-k-1} z_{i,n} \bar{z}_{i+k,n}) , \tag{6}$$

and substituting $z = y\bar{x}$ where $y = hx + n$, we get

$$= E(\frac{1}{N-k}\sum_{n=0}^{N-k-1}(h_{i,n}x_{i,n}^2 + \bar{x}_{i,n}n_{i,n})(\bar{h}_{i,n+k}x_{i,n+k}^2 + x_{i,n+k}\bar{n}_{i,n+k})) \qquad (7)$$

Assuming constant pilot power (as is used in LTE and Wimax) $x^2 = 1$, and that $E(\bar{x}_{i,n}n_{i,n}) = 0$, e.g. there is no correlation between the pilots and noise. We then get:

$$= E(\frac{1}{N-k}\sum_{n=0}^{N-k-1}(h_{i,n}\bar{h}_{i,n+k} + n_{i,n}\bar{n}_{i,n+k})) \qquad (8)$$

Further assuming (e.g. in AWGN channels) $E(n_{i,n}n_{i,n+k}) = \sigma^2$ for k = 0 and $E(n_{i,n}n_{i,n+k}) = 0$ for k!= 0, and given $E(h_{i,n}\bar{h}_{i,n+k}) = R_{xx}(k)$ by definition we get:

$$E(\tilde{R}_{xx}(k)) = R_{xx}(0) + \sigma^2 \text{ for k = 0, and} \qquad (9)$$

$$E(\tilde{R}_{xx}(k)) = R_{xx}(k) \text{ for all other k.} \qquad (10)$$

To improve the estimation accuracy, either the value of $\tilde{R}_{xx}(0)$ can be updated to remove $\sigma^2$ (if it is known or estimated) or the lag of k = 0 can be ignored when calculating the comparison metric.

In the final tap selection and estimation step or stage (TS/EST) 160 tap values with the best metric can be selected and delay spread and/or Doppler spread estimates can be calculated based on the selected tap values.

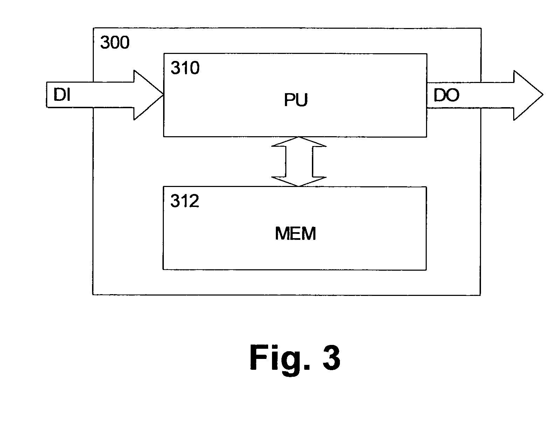

Fig. 3 shows a schematic block diagram of an alternative software-based implementation according to a second embodiment. The required functionalities can be implemented in a computer device 300 with a processing unit 310, which may be any processor or computer device supporting multi-tasking with a control unit which performs control based on software routines of a control program stored in a memory 312. The control program may also be stored separately on a computer-readable medium. Program code instructions are fetch from the memory 312 and are loaded to the control unit of the processing unit 310 in order to perform the functions of the steps or stages of Fig. 1, which may be implemented as the above mentioned software routines. The processing steps may be performed on the basis of input data DI and may generate output data DO. In the present interaction system, the input data DI may correspond to received OFDM resource blocks, and the output data DO may correspond to the selected taps or delay/Doppler spread estimates.

Consequently, the functionalities of the above embodiments may be implemented as a computer program product comprising code means for generating each individual step of the proposed channel estimation when run on a computer device or data processor.

In summary, a method and apparatus for performing channel estimation in a wireless communication system have been described, wherein pilot reference signals are extracted from a received signal based on pilot reference signal positions. The extracted pilot signals are compensated by an expected conjugate pilot reference signal and estimated tap values for a channel filter are derived by performing autocorrelation based on at least one of extracted and compensated pilot signals with different predetermined lag values in the time domain and extracted and compensated pilot signals with different predetermined lag values in the frequency domain. The estimated tap values are compared with pre-calculated tap values by using a comparison metric, and optimal ones of the estimated tap values are selected based on the result of the comparison metric.

It is apparent that the invention can easily be extended to any software environment which may include a collection of hardware and software technologies where some or all of the operating functions are implemented through modifiable software or firmware operating on programmable processing technologies. Such devices include field programmable gate arrays (FPGAs), digital signal processors (DSPs), general purpose processors (GPPs), programmable System on Chip (SoC) or other application specific programmable processors. The use of these technologies allows new wireless features and capabilities to be added to existing radio systems without requiring new hardware. Moreover, the invention is not restricted to LTE systems and can be applied to any multi-channel communication system with pilot-based channel estimation. The embodiments may thus vary within the scope of the attached claims.

**Claims**

1. A method of performing channel estimation in a wireless communication system, said method comprising:

   a) extracting (120) pilot reference signals from a received signal based on pilot reference signal positions of a received signal;

   b) compensating (120) said extracted pilot signals by an expected conjugate of the pilot reference signal, to get $z = y\bar{x}$, wherein y denotes an extracted pilot reference signal, x denotes the expected conjugate of the pilot reference signal and z denotes a matrix representing compensated pilot reference signals;

   c) deriving (130) estimated tap values for a channel filter by performing autocorrelation based on at least one of extracted and compensated pilot signals with different predetermined lag values in the time domain and extracted and compensated pilot signals with different predetermined lag values in the frequency domain, wherein the lag values define the lag of the autocorrelation sequence to itself;

   d) comparing (150) said estimated tap values with pre-calculated tap values by using a comparison metric; and

   e) selecting (160) optimal ones of said estimated tap values based on the result of said comparison metric.

2. The method according to claim 1, further comprising calculating virtual pilot reference signals to assist in reducing bias from offset pilot reference signal positions.

3. The method according to claim 1 or 2, further comprising using only a portion of all possible lag values for said autocorrelation.

4. The method according to any one of the preceding claims, further comprising averaging (140) said derived estimated tap values over the time domain or over different receive or transmit antennas.

5. The method according to claim 4, further comprising varying the length of said averaging over the time domain.

6. The method according to any one of the preceding claims, further comprising calculating at least one of delay and Doppler spread by applying a predefined channel model to said estimated tap values.

7. The method according to any one of the preceding claims, wherein said comparing metric comprises minimum mean squared error.

8. The method according to any one of the preceding claims, further comprising compensating residual noise power of an estimated tap value at a lag value of zero or ignoring said estimated tap value at said lag value of zero in said comparison metric.

9. The method according to any one of the preceding claims, further comprising pre-calculating and storing said estimated tap values for later lookup.

10. An apparatus for performing channel estimation in a wireless communication system, said apparatus comprising:

    a) extraction means (120) for extracting pilot reference signals from a received signal based on pilot reference signal positions of a received signal;

    b) compensation means (120) for compensating said extracted pilot signals by an expected conjugate of the pilot reference signal, to get $z = y\bar{x}$, wherein y denotes an extracted pilot reference signal, $\bar{x}$ denotes the expected conjugate of the pilot reference signal and z denotes a matrix representing compensated pilot reference signals;

    c) correlation means (130) for deriving estimated tap values for a channel filter by performing autocorrelation based on at least one of extracted and compensated pilot signals with different predetermined lag values in the time domain and extracted and compensated pilot signals with different predetermined lag values in the frequency domain, wherein the lag values define the lag of the autocorrelation sequence to itself;

    d) comparison means (150) for comparing said estimated tap values with pre-calculated tap values by using a comparison metric; and

    e) selection means (160) for selecting optimal ones of said estimated tap values based on the result of said comparison metric.

11. The apparatus according to claim 10, further comprising averaging means (140) for averaging said derived estimated tap values over the time domain or over different receive or transmit antennas.

**12.** The apparatus according to claim 11, wherein said averaging means (140) are adapted to provide an adjustable length of said averaging over the time domain.

**13.** The apparatus according to any one of claims 10 to 12, wherein said comparison means (150) is adapted to compensate residual noise power of an estimated tap value at a lag value of zero or to ignore said estimated tap value at said lag value of zero in said comparison metric.

**14.** A receiver device comprising an apparatus according to any one of claims 10 to 13.

**15.** A computer program product comprising code means for producing the steps of any one of claims 1 to 9 when run on a computing device.

**Patentansprüche**

**1.** Verfahren zum Durchführen einer Kanalschätzung in einem drahtlosen Kommunikationssystem, wobei das Verfahren umfasst:

a) Extrahieren (120) von Pilotreferenzsignalen aus einem empfangenen Signal basierend auf Pilotreferenzsignalpositionen eines empfangenen Signals;
b) Kompensieren (120) der extrahierten Pilotsignale durch eine erwartete Konjugierte des Pilotreferenzsignals, um $z = y\bar{x}$ zu erhalten, wobei $y$ ein extrahiertes Pilotreferenzsignal bezeichnet, $\bar{x}$ die erwartete Konjugierte des Pilotreferenzsignals bezeichnet und z eine Matrix bezeichnet, die kompensierte Pilotreferenzsignale repräsentiert;
c) Ableiten (130) von geschätzten Tab-Werten für einen Kanalfilter durch Durchführen einer Autokorrelation basierend auf zumindest einem von extrahierten und kompensierten Pilotsignalen mit unterschiedlichen vorbestimmten Verzögerungswerten im Zeitbereich und extrahierten und kompensierten Pilotsignalen mit unterschiedlichen vorbestimmten Verzögerungswerten im Frequenzbereich, wobei die Verzögerungswerte die Verzögerung der Autokorrelationssequenz zu sich selbst definieren;
d) Vergleichen (150) der geschätzten Tab-Werte mit vorberechneten Tab-Werten durch Nutzen einer Vergleichsmetrik; und
e) Auswählen (160) von optimalen der geschätzten Tab-Werte basierend auf dem Ergebnis der Vergleichsmetrik.

**2.** Verfahren nach Anspruch 1, des Weiteren umfassend ein Berechnen von virtuellen Pilotreferenzsignalen, um beim Reduzieren eines Bias von versetzten Pilotreferenzsignalpositionen zu unterstützen.

**3.** Verfahren nach Anspruch 1 oder 2, des Weiteren umfassend ein Verwenden von nur einem Teil von allen möglichen Verzögerungswerten für die Autokorrelation.

**4.** Verfahren nach einem der vorangegangenen Ansprüche, des Weiteren umfassend ein Mitteln (140) der abgeleiteten geschätzten Tab-Werte über den Zeitbereich oder über unterschiedliche Empfangs- oder Sendeantennen.

**5.** Verfahren nach Anspruch 4, des Weiteren umfassend ein Variieren der Länge des Mittelns über den Zeitbereich.

**6.** Verfahren nach einem der vorangegangenen Ansprüche, des Weiteren umfassend ein Berechnen von zumindest einem von einer Verzögerung und einer Doppler-Spreizung durch Anwenden eines vordefinierten Kanalmodells auf die geschätzten Tab-Werte.

**7.** Verfahren nach einem der vorangegangenen Ansprüche, wobei die Vergleichsmetrik einen minimalen mittleren quadratischen Fehler umfasst.

**8.** Verfahren nach einem der vorangegangenen Ansprüche, des Weiteren umfassend ein Kompensieren einer verbleibenden Rauschleistung eines geschätzten Tab-Wertes bei einem Verzögerungswert von Null oder ein Ignorieren des geschätzten Tab-Wertes bei dem Verzögerungswert von Null in der Vergleichsmetrik.

**9.** Verfahren nach einem der vorangegangenen Ansprüche, des Weiteren umfassend ein Vorberechnen und Speichern der geschätzten Tab-Werte für ein späteres Lookup.

**10.** Vorrichtung zum Durchführen einer Kanalschätzung in einem drahtlosen Kommunikationssystem, wobei die Vorrichtung umfasst:

a) Extraktionsmittel (120) zum Extrahieren von Pilotreferenzsignalen aus einem empfangenen Signal basierend auf Pilotreferenzsignalpositionen eines empfangenen Signals;

b) Kompensationsmittel (120) zum Kompensieren der extrahierten Pilotsignale durch eine erwartete Konjugierte des Pilotreferenzsignals, um $z = y\bar{x}$ zu erhalten, wobei $y$ ein extrahiertes Pilotreferenzsignal bezeichnet, $\bar{x}$ die erwartete Konjugierte des Pilotreferenzsignals bezeichnet und z eine Matrix bezeichnet, die kompensierte Pilotreferenzsignale repräsentiert;

c) Korrelationsmittel (130) zum Ableiten von geschätzten Tab-Werten für einen Kanalfilter durch Durchführen einer Autokorrelation basierend auf zumindest einem von extrahierten und kompensierten Pilotsignalen mit unterschiedlichen vorbestimmten Verzögerungswerten im Zeitbereich und extrahierten und kompensierten Pilotsignalen mit unterschiedlichen vorbestimmten Verzögerungswerten im Frequenzbereich, wobei die Verzögerungswerte die Verzögerung der Autokorrelationssequenz zu sich selbst definieren;

d) Vergleichsmittel (150) zum Vergleichen der geschätzten Tab-Werte mit vorberechneten Tab-Werten durch Nutzen einer Vergleichsmetrik; und

e) Auswahlmittel (160) zum Auswählen von optimalen der geschätzten Tab-Werte basierend auf dem Ergebnis der Vergleichsmetrik.

**11.** Vorrichtung nach Anspruch 10, des Weiteren umfassend Mittelungsmittel (140) zum Mitteln der abgeleiteten geschätzten Tab-Werte über den Zeitbereich oder über unterschiedliche Empfangs- oder Sendeantennen.

**12.** Vorrichtung nach Anspruch 11, wobei die Mittelungsmittel (140) angepasst sind, eine einstellbare Länge des Mittelns über den Zeitbereich bereitzustellen.

**13.** Vorrichtung nach einem der Ansprüche 10 bis 12, wobei das Vergleichsmittel (150) angepasst ist, eine verbleibende Rauschleistung eines geschätzten Tab-Wertes bei einem Verzögerungswert von Null zu kompensieren oder den geschätzten Tab-Wert bei dem Verzögerungswert von Null in der Vergleichsmetrik zu ignorieren.

**14.** Empfängergerät, umfassend eine Vorrichtung nach einem der Ansprüche 10 bis 13.

**15.** Computerprogrammprodukt, umfassend Codiermittel zum Erzeugen der Schritte nach einem der Ansprüche 1 bis 9, wenn diese auf einem Computergerät ausgeführt werden.

## Revendications

**1.** Procédé pour effectuer une estimation de canal dans un système de communication sans fil, procédé dans lequel :

a) on extrait (120) des signaux pilotes de référence d'un signal reçu sur la base de positions de signaux pilotes de référence d'un signal reçu ;

b) on compense (120) les signaux pilotes extraits par un conjugué escompté du signal pilote de référence pour obtenir $z = y\bar{x}$, $y$ désignant un signal pilote de référence extrait, $\bar{x}$ désignant le conjugué escompté du signal pilote de référence et z désignant une matrice représentant des signaux pilotes de référence compensés ;

c) on déduit (130) des valeurs de prise estimées pour un filtre de canal, en effectuant une autocorrélation reposant sur au moins l'un des signaux pilotes extraits et compensés ayant des valeurs de retard différentes déterminées à l'avance dans le domaine temporel et de signaux pilotes extraits et compensés ayant des valeurs de retard différentes déterminées à l'avance dans le domaine fréquentiel, les valeurs de retard définissant le retard de la séquence d'autocorrélation à elle-méme ;

d) on compare (150) les valeurs de prise estimées à des valeurs de prise calculées à l'avance en utilisant une métrique de comparaison ; et

e) on sélectionne (160) des valeurs optimales parmi les valeurs de prise estimées sur la base du résultat de la métrique de comparaison.

**2.** Procédé suivant la revendication 1, dans lequel en outre on calcule des signaux pilotes de référence virtuels pour faciliter la réduction de l'erreur systématique de positions de signal pilote décalées.

**3.** Procédé suivant la revendication 1 ou 2, dans lequel en outre on utilise seulement une partie de toutes les valeurs de retard possibles pour l'autocorrélation.

4.  Procédé suivant l'une quelconque des revendications précédentes, dans lequel, en outre, on fait (140) la moyenne des valeurs de prise estimées déduites sur le domaine temporel ou sur des antennes différentes de réception ou d'émission.

5.  Procédé suivant la revendication 4, dans lequel on fait varier la longueur du calcul de la moyenne sur le domaine temporel.

6.  Procédé suivant l'une quelconque des revendications précédentes, dans lequel, en outre, on calcule au moins un retard et un étalement Doppler, en appliquant un modèle de canal défini à l'avance aux valeurs de prise estimées.

7.  Procédé suivant l'une quelconque des revendications précédentes, dans lequel la métrique de comparaison comprend une erreur quadratique moyenne minimum.

8.  Procédé suivant l'une quelconque des revendications précédentes, dans lequel, en outre, on compense une puissance de bruit résiduelle d'une valeur de prise estimée à une valeur de retard de zéro où on néglige la valeur de prise estimée à la valeur de retard de zéro dans la métrique de comparaison.

9.  Procédé suivant l'une quelconque des revendications précédentes, dans lequel, en outre, on calcule à l'avance et on mémorise les valeurs de prise estimées pour une consultation ultérieure.

10. Dispositif pour effectuer une estimation de canal dans un système de communication sans fil, le dispositif comprenant :

    a) des moyens (120) d'extraction pour extraire des signaux pilotes de référence d'un signal reçu sur la base de position de signaux pilotes de référence d'un signal reçu ;
    b) des moyens (120) de compensation pour compenser les signaux pilotes extraits par un conjugué escompté du signal pilote de référence, pour obtenir $z = y\bar{x}$, $y$ désignant un signal pilote de référence extrait, $x$ désignant le conjugué escompté du signal pilote de référence et $z$ désignant une matrice représentant des signaux pilotes de référence compensés ;
    c) des moyens (130) de corrélation pour déduire des valeurs de prise estimées pour un filtre de canal, en effectuant une autocorrélation reposant sur au moins l'un des signaux pilotes extraits et compensés ayant des valeurs de retard différentes déterminées à l'avance dans le domaine temporel et de signaux pilotes extraits et compensés ayant des valeurs de retard différentes déterminées à l'avance dans le domaine fréquentiel, les valeurs de retard définissant le retard de la séquence d'autocorrélation à elle-même ;
    d) des moyens (150) de comparaison pour comparer les valeurs de prise estimées à des valeurs de prise calculées à l'avance, en utilisant une métrique de comparaison ; et
    e) des moyens (160) de sélection pour sélectionner celles optimales parmi les valeurs de prise estimées sur la base du résultat de la métrique de comparaison.

11. Dispositif suivant la revendication 10, comprenant en outre des moyens (140) pour faire la moyenne des valeurs de prise estimées déduites sur le domaine temporel ou sur des antennes différentes de réception ou d'émission.

12. Dispositif suivant la revendication 11, dans lequel des moyens (140) pour faire la moyenne sont conçus pour fournir une longueur réglable de l'opération dans laquelle on fait la moyenne sur le domaine temporel.

13. Dispositif suivant l'une des revendications 10 à 12, dans lequel des moyens (150) de comparaison sont conçus pour compenser de la puissance de bruit résiduelle d'une valeur de prise estimée à une valeur de retard de zéro ou pour négliger la valeur de prise estimée à la valeur de retard de zéro dans la métrique de comparaison.

14. Dispositif récepteur comprenant un dispositif suivant l'une quelconque des revendications 10 à 13.

15. Produit de programme d'ordinateur comprenant des moyens de code pour produire les stades de l'une quelconque des revendications 1 à 9, lorsqu'ils passent sur un dispositif informatique.

**Fig. 1**

**Fig. 2**

300

310

DI

PU

DO

312

MEM

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100195774 A1
- US 7139320 B1
- WO 2006018034 A1
- US 20100260248 A1
- WO 2011154964 A1

### Non-patent literature cited in the description

- **SINEM COLERI et al.** Channel Estimation Techniques Based on Pilot Arrangement in OFDM Systems. *IEEE TRANSACTIONS ON BROADCASTING,* 01 September 2002, vol. 48 (3